# EUROPEAN PATENT APPLICATION

(11) **EP 4 686 874 A1**
(43) Date of publication of application: **04.02.2026**
(21) Application number: 25190453.8
(22) Date of filing: 18.07.2025
(51) Int. Cl.: F24C 3/12, F16L 23/00, F23K 5/00

(54) **GAS COOKTOP WITH A GAS INLET CONNECTOR**

(30) Priority: 01.08.2024 EP 24382859
(71) Applicant: BSH Hausgeräte GmbH, 81739 München (DE)
(72) Inventor: Placer Maruri, Emilio, 39120 Liencres (ES); Gonzalez Moujir, Eva, New Bern, 28562 (US); Mesones Madrazo, Angela, Santander (ES)

(57) **Abstract**

The invention relates to a gas cooktop (10) comprising a main gas inlet pipe (4) for channelling gas to at least one gas tap (6), a gas burner (7) connected to the gas tap (6) by means of a secondary gas pipe (8) and a gas inlet connector (1) for connecting a main gas inlet pipe end (41) to a grid pipe outlet (51) of a gas supply grid pipe (5), wherein the gas inlet connector (1) has a nut element (2), with a screwed head portion (21) connected with a screwed fitting to the main gas inlet pipe end (41), with a connecting portion (22) provided with a ring-shaped sealing slot (23) in a circumferential direction with a sealing gasket (24), and with a nut portion (25) arranged between the head portion (21) and the connecting portion (22), and at least one first elbow-shaped connection fitting (3), with a coupling part (32) removably connected to the connecting portion (22) and a connector part (31) having a first thread (33) to connect the at least one first connection fitting (3) to the grid pipe outlet (51) by means of a screwable fitting. To achieve a versatile installation of the gas cooktop, the gas inlet connector (1) further has a second connection fitting (3') connectable by means of its coupling part (32') to the connecting portion (22) of the nut element (22) replacing the first connection fitting (31) and differing from the first connection fitting (31) in that the connector part (31') of the second connection fitting (31') has a second thread (33') different from the first thread (33) regarding metric and/or diameter.

## Description

### TECHNICAL FIELD

The invention relates to the technical field of gas cooktops comprising a main gas inlet pipe for channelling gas to at least one gas tap, a gas burner connected to the gas tap by means of a secondary gas pipe and a gas inlet connector for connecting a main gas inlet pipe end to a grid pipe outlet of a gas supply grid pipe, wherein the gas inlet connector has a nut element, with a screwed head portion connected with a screwed fitting to the main gas inlet pipe end, with a connecting portion provided with a ring-shaped sealing slot in a circumferential direction with a sealing gasket, and with a nut portion arranged between the head portion and the connecting portion, and at least one first elbow-shaped connection fitting, with a coupling part removably connected to the connecting portion and a connector part having a first thread to connect the at least one first connection fitting to the grid pipe outlet by means of a screwable fitting.

### STATE OF THE ART

EP3425252 B1 describes a structure of a gas inlet connector of a gas cooking appliance configured to connect a main gas pipe of the gas appliance to a gas hose of the gas grid. The gas inlet connector includes a nut and a connecting element with a connector part and a coupling part. An external thread of the nut is coupled with an internal thread of a main gas inlet pipe and the connector part of the connecting element engages with the nut by means of a rotatable connection. A rubber hose end is connected to the coupling part of the coupling element and the other rubber hose end is connected to the gas pipe. In this manner, the connector part and the main gas inlet pipe are fixedly connected to each other by means of the nut. The gas from the gas grid flows into the coupling part, then it flows out of the connector part and flows through the nut into the main gas inlet pipe into the gas appliance.

### DESCRIPTION OF THE INVENTION

A technical problem solved by this invention is a gas cooking appliance with a more versatile connection to the gas grid.

To solve this technical problem, this application provides a gas cooktop comprising a main gas inlet pipe for channelling gas to at least one gas tap, a gas burner connected to the gas tap by means of a secondary gas pipe and a gas inlet connector for connecting a main gas inlet pipe end to a grid pipe outlet of a gas supply grid pipe, wherein the gas inlet connector has a nut element, with a screwed head portion connected with a screwed fitting to the main gas inlet pipe end, with a connecting portion provided with a ring-shaped sealing slot in a circumferential direction with a sealing gasket, and with a nut portion arranged between the head portion and the connecting portion, and at least one first elbow-shaped connection fitting, with a coupling part removably connected to the connecting portion and a connector part having a first thread to connect the at least one first connection fitting to the grid pipe outlet by means of a screwable fitting. To facilitate the connection of the gas cooktop to the gas grid, it is provided that the gas inlet connector further has a second connection fitting connectable by means of its coupling part to the connecting portion of the nut element replacing the first connection fitting and differing from the first connection fitting in that the connector part of the second connection fitting has a second thread different from the first thread regarding metric and/or diameter.

The gas cooking appliance is a gas cooktop that can be autonomous or a part of a gas or electric stove. The gas cooking appliance has a generally metallic housing inside which the components of the appliance are arranged and enclosed inside the appliance when the housing is closed with the cooking surface.

The cooking vessels resting on the cooking hobs arranged on the pan supports can be placed on the cooking surface. The cooking hobs have a gas burner and a flame diffuser and the gas reaches the cooking hobs through the secondary gas pipes. The secondary gas pipes are connected to the gas taps, which are operated by the user. The gas taps are connected to the main gas inlet pipe. The main gas inlet pipe is a metal pipe, which is mostly arranged inside the appliance and a main gas inlet pipe end protrudes from the housing. A gas inlet connector acting as a connection of the appliance to the gas supply grid pipe of the gas grid is connected to the main gas inlet pipe end. The gas grid may be a stand-alone gas bottle as well. The gas supply grid pipe can be made of metal or be a hose having at its end a fixing element of gas supply grid pipe.

The gas inlet connector is a tube-shaped piece preferably made of metal having a nut element and at least one connection fitting. At one end, the nut element has a head portion, having a preferably male thread and, at the other end, a connecting portion and, between them, a nut portion with a preferably hexagonal section to be operable with a wrench. The nut element is tubular, preferably longitudinal, and is fixed by means of the thread of the head portion to a female thread arranged at the main gas inlet pipe end and tightened by means of the nut portion. The nut element may leave the factory fully assembled, so the assembly operator does not need to modify the tightening torque against the main gas inlet pipe end. In another configuration, the nut element is joined by welding or the like to the main gas inlet pipe end through the head portion and the nut portion in such a manner that the connecting portion remains as the last free and accessible end of the main gas inlet pipe end from outside the appliance housing of the gas cooktop to connect it to the gas supply grid pipe by means of the connection fitting.

The connecting portion of the nut element has a tubular outer surface with at least one ring-shaped sealing slot into which a sealing gasket is press-fitted. The sealing gasket arranged in the slot protrudes from the outer surface of the connecting portion. In preferred configurations, the outer surface of the connecting portion has more than one ring-shaped sealing slot with corresponding sealing gaskets mounted.

The at least one first connection fitting of the inlet connector can be coupled to the connecting portion of the nut element. The first connection fitting is tubular too, preferably elbow-shaped and, at one end, it has a coupling part into which the connecting portion of the nut element can be press-fitted removably in such a manner that the entire perimeter of the sealing gasket is contacting the inner wall of the coupling part directly. The inner wall of the coupling part is cylindrical, having a diameter slightly smaller than the diameter of the outer section of the connecting portion so the coupling between both of them is as precise as possible, differing from one another in the range of millimetre tenths or hundredths.

On the other end, the first connection fitting has a connector part with a first thread to connect the first connection fitting to the grid pipe outlet by means of a screwed fitting. A fixing element of gas supply grid pipe is provided at the grid pipe outlet, which is normally made as a hexagonal nut fitted on the grid pipe outlet.

The fixing element of gas supply grid pipe is usually different depending on the gas supplier, the gas source or the country or region where the appliance is installed. This might be a problem for the assembly of the appliance when the first thread of the connector part of the first connection fitting does not have the same metric and/or diameter as the fixing element of the grid pipe outlet of the gas grid.

To this, it is provided that the cookplate further comprises a second connection fitting having a coupling part engaging with the connecting portion of the nut element, which is substantially the same as the coupling part of the first connection fitting and fixed in the same manner and equally tightly and securely against gas leakages as the first connection fitting. The second connection fitting has a connector part with a second thread differing from the first thread regarding metric and/or diameter in such a manner that the second thread fits with the diameter of the fixing element of the grid pipe outlet of the gas grid correctly.

In this manner, when the gas cooking appliance is mounted on the gas grid pipe of the gas grid, the user can select one of the available connection fittings in which the first or the second thread fits with the diameter and the metric of the fixing element of the grid pipe outlet of the gas grid.

Furthermore, it is possible that the geometry of the connecting portion and the coupling part are interchanged in such a manner that they are connected to each other in the same manner. This means that the coupling part has a slot with a sealing gasket and is fitted into a cylindrical hollow connecting portion of the nut element.

Regarding the technical problems existing in the gas cooktop from the state of the art, this application provides a gas cooktop having a gas inlet connector, which can be connected to different pipes of a gas supply grid easily. In addition, the gas inlet connector with its two-piece configuration makes it possible that, when the gas inlet connector needs to be rotated to be adjusted to the grid's gas inlet pipe, it is guaranteed that the inlet connector has no leakages.

In an embodiment of the invention, the coupling part is provided with an opening formed through its circumferential wall, the outer wall of the connecting portion is provided with a first ring-shaped slot in the circumferential direction, a stop is mounted in the opening, and the stop extends up to the first ring-shaped slot. The circumferential wall of the coupling part is cylindrical and the opening extends through the same, preferably in a perpendicular manner. The outer wall of the connecting portion is cylindrical as well and its diameter is substantially the same as that of the coupling part and the first ring-shaped slot has an even smaller diameter so, when the connecting portion is inserted in the coupling part and the first ring-shaped slot is located at the same height as the opening, the stop is mounted into the opening extending through the circumferential wall of the coupling part and is fitted into the slot. In this manner, the coupling part and the connecting portion cannot be separated from each other since the linear movement relative to each other is blocked by the stop but they can be freely rotated when the stop, fixed in the opening, can be slid over the first ring-shaped slot. This configuration is particularly advantageous when there are more than one opening and one stop for mounting the connection fitting on the nut element.

Optionally, the opening is a circular orifice and the stop member is a screw, or the opening is an arc-shaped opening, and the stop rod is a clamp.

In another embodiment, the outer wall of the connecting portion is provided with at least two ring-shaped sealing slots, and the sealing gasket is an O-shaped sealing gasket. An improved tightness is thereby guaranteed.

Optionally, the outer wall of the connecting portion is provided with a second ring-shaped slot in the circumferential direction and a metal inner ring is mounted in the second ring-shaped slot. This improves the fixation between the connecting portion and the connector part.

Optionally, the gas cooktop further comprises a connecting element of main gas inlet pipe mounted on the main gas inlet pipe end and screwed to the head portion of the nut element. A steady and simple fixation is thereby provided.

Optionally, the head portion is provided with an external thread, the connecting element of main gas inlet pipe is provided with an internal thread and the head portion is screwed into the connecting element of main gas inlet pipe. An assembly by using a tool is facilitated in this manner and by the fact that each of the elements can be provided with an internal and external thread in a reverse manner since it makes no difference.

Advantageously, the first thread and the second thread can be screwed to a first and a second fixing element of gas supply grid pipe respectively, which is arranged at the grid pipe outlet. This allows a gas cooktop having a gas inlet connector with at least one first connection fitting and one second connection fitting to be connected to different fixing elements of gas supply grid pipe of the gas supply grid.

### DESCRIPTION OF THE FIGURES

An exemplary embodiment of the invention is represented in the figures. These show:
Fig. 1 is a plan view of a gas cooktop with a gas inlet connector;
Fig. 2 is a perspective view of a gas cooktop housing with a gas inlet connector;
Fig. 3a is an elevational view of a nut element;
Fig 3b is a perspective view of a nut element;
Fig. 3c is a section of the nut element from figure 3b;
Fig. 4a shows two views of the first connection fitting;
Fig. 4b shows two views of the second connection fitting;
Fig. 5 shows two views of the gas inlet connector;
Fig.6 shows a schematic view of the gas inlet connector with two of its feasible connection fittings; and
Fig.7 shows the schematic view of a section of a gas inlet connector connected to the gas inlet pipe and to the gas grid pipe outlet.

### DESCRIPTION OF THE PREFERRED EMBODIMENT

To make the objectives, features and beneficial effects of this invention more understandable, the particular embodiments of this application are described in detail subsequently with reference to the accompanying drawings.

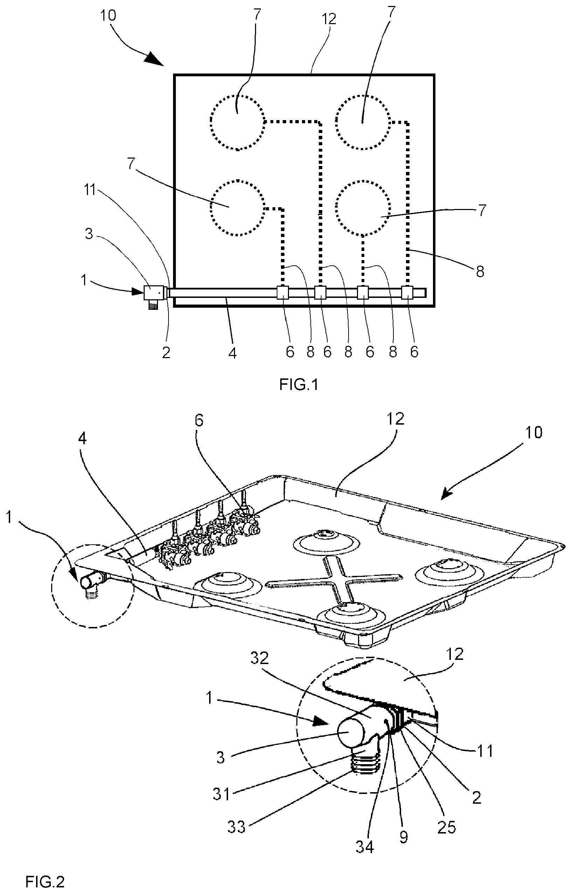

Figure 1 shows a gas cooktop schematically, mainly its gas supply system of an external gas grid. The gas cooktop 10 has a housing 12 in which all the components of the appliance are mounted. The main gas inlet pipe 4 arranged inside the housing 12 protrudes outwardly from the housing 12 through a window providing it with access into the gas cooktop 10 and extends over an inner lateral side of the housing 12. Four gas taps 6 regulating the gas flow-through from the main gas inlet pipe 4 to the gas burners 7 through secondary gas pipes 8 are connected to the main gas inlet pipe 4.

The part of the main gas inlet pipe 4 protruding outwardly from the housing 12 is the main gas inlet pipe end 41 and has a connecting element of main gas inlet pipe 11 formed in this example by a female nut to which the nut element 2 of the gas inlet connector 1 is screwed, and the first connection fitting 3 of the gas inlet connector 1 is connected to the other end of the nut element 2. A surface plate closes the housing 12, the components of the gas cooktop 10 remaining inside the same.

Figure 2 shows in a perspective view a part of the gas cooktop 10 from figure 1 with the housing 12 containing the components of the appliance, in which the four gas taps 6 can be seen connected to the main gas inlet pipe 4 protruding from the window of the housing 12 with its main gas inlet pipe end 41. The gas inlet connector 1 is connected to the main gas inlet pipe end 41. In the same figure 2, an enlarged detail of the gas inlet connector 1 protruding from the housing 12 and fixed to the connecting element of main gas inlet pipe 11 interposed between the main gas inlet pipe end 41 and the nut element 2 is shown. Regarding the nut element 2, the nut portion 25 can be observed remaining visible between the connecting element of main gas inlet pipe 11 and the coupling part 32 of the connection fitting 3. The connection fitting 3 is L-shaped and the connector part 31 ending with a thread 33 is arranged on the side facing away from the coupling part 32. In the coupling part 32 there is an opening 34 in which the stop 9 in the form of a screw is inserted. Although the stop 9 is not essential, it does ensure that the coupling part 32 and the connecting portion 22 are not separated from each other accidentally. Therefore, the opening 34 would not be essential either.

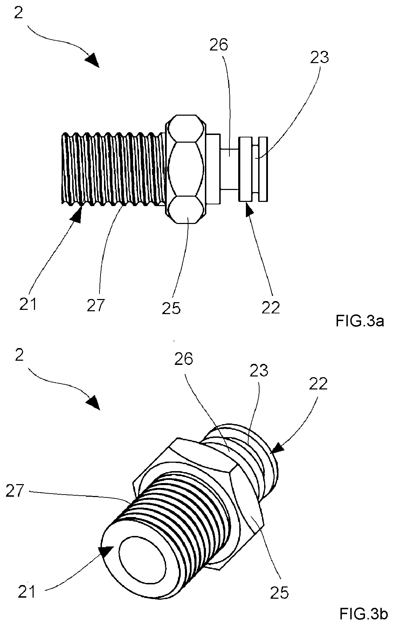

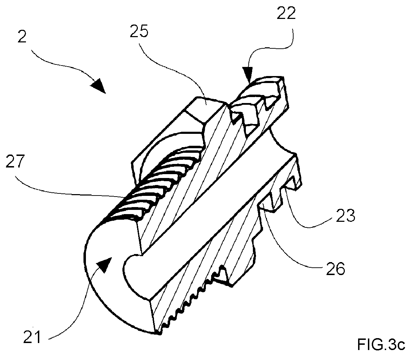

Figures 3a, 3b and 3c show the nut element 2 in different views, showing its three parts, the head portion 21, the connecting portion 22 and the nut portion 25. Figure 3a shows a side view of the nut element 2, figure 3b shows a perspective view in which the inlet into the gas passageway can be seen and figure 3c shows a section of the nut element 2 from figure 3b in which the gas passageway extending through the entire nut element 2 is shown.

The head portion 21 has an external thread 27 by means of which it can be screwed fixedly to the connecting element of main gas inlet pipe 11. The connecting portion 22 has a ring-shaped sealing slot 23 into which a sealing gasket 24 is fitted and a first ring-shaped slot 26 into which the stop 9 is fitted to fix the connection fitting 3 rotatably. Despite not being shown in the figures, the connecting portion 22 can have more ring-shaped sealing slots 23 into which other sealing gaskets be fitted or at least one second ring-shaped slot 23 into which a metal guide ring can be fitted, which favours the correct insertion of the connecting portion 22 into the coupling part 32. The nut portion 25 is located between the head portion 21 and the connecting portion 22 and used to couple a tool when assembling the nut element 2 with the connecting element of main gas inlet pipe 11 present at the main gas inlet pipe end 41 of the main gas inlet pipe 4.

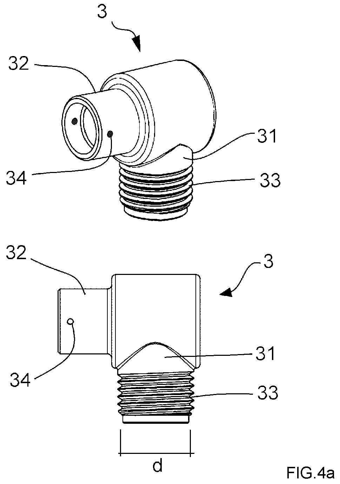

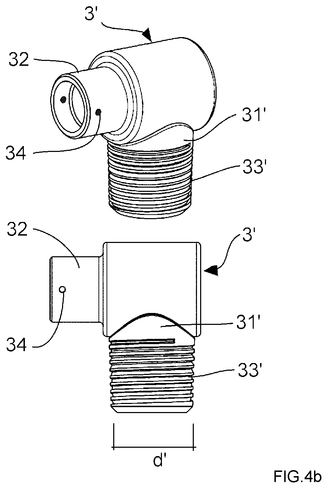

Figures 4a and 4b each represent two views of a first connection fitting 3 and a second connection fitting 3' respectively of the gas inlet connector 1. The coupling part 32 is shown in both figures with two openings 34. The coupling part 32 of the first and second connection fitting 3 are identical to be connected to the connecting portion 22 of the nut element 2 in the same manner. Both connection fittings 3-3' are L-shaped and, at the other end, they have the connector part 31-31' with a first thread 33 and a second thread 33' respectively having different metrics and diameters d-d' to be connected to a first and to a second fixing element of gas supply grid pipe 52-52' arranged at the grid pipe outlet 51 of the gas supply grid pipe 5 precisely fitting with the metric and diameters d-d' of the respective connector parts 31-31'.

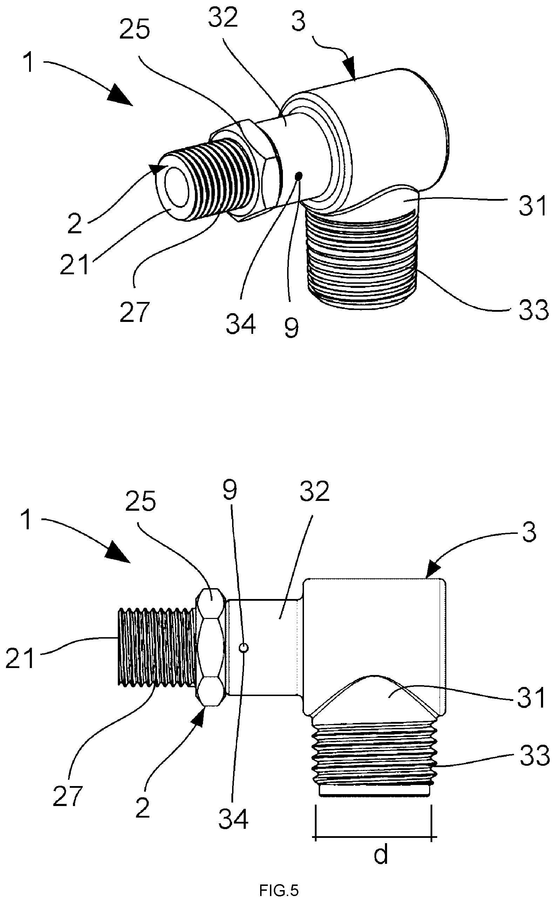

Figure 5 shows the gas inlet connector 1 in two different views, a perspective view in the top and a side view in the bottom. In both views, the gas inlet connector 1 is represented with the nut element 2 and the first connection fitting 3 connected to each other in such a manner that the connecting portion 22 is inserted in the coupling part 32 entirely and the stop 9 extending through the opening 34 is fitted into the first ring-shaped slot 26. The nut portion 25 is located precisely at the mouth of the coupling part 32, followed by the head portion 21 with its external thread 27. The connector part 31 with its first thread 33 having its metric and the diameter d is located at the opposite end of the gas inlet connector 1.

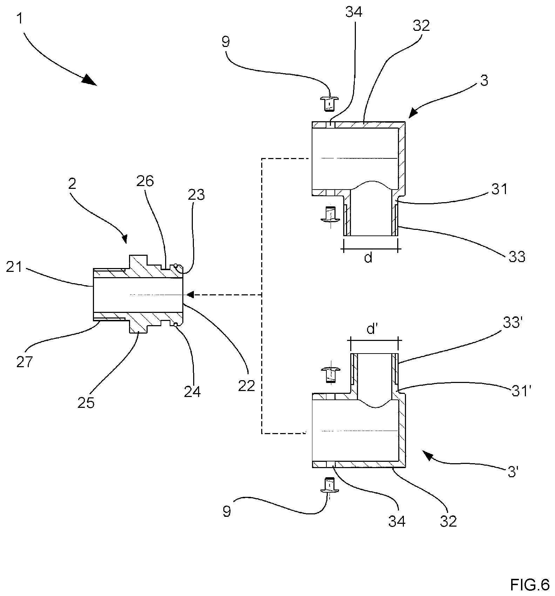

Figure 6 shows a side section of the gas inlet connector 1 and two feasible options of a first and second connection fitting 3-3' in a figurative representation simulating the possibility to connect in the same manner any of both coupling parts 32 of any of both connection fittings 3 to the connecting portion 22 of the nut element 2.

Regarding the section of the nut element 2, the head portion 21 with its external thread 27, the connecting portion 22 with a first ring-shaped slot 26 and a ring-shaped sealing slot 23 with a sealing gasket 24 installed can be seen. The nut portion 25 is located between the head portion 21 and the connecting portion 22. There is a gas passageway extending through the entire nut element 2.

In the section of both connection fittings 3-3', a coupling part 32 having an opening of the same size for both of them and into which the connecting portion 22 of the nut element 2 can be fitted indistinctively is shown. There are two openings 34 with their corresponding stops 9 facing them in each coupling part 32. The difference between both connection fittings 3-31 is the connector part 31-31 since the first connection fitting 3 has a connector part 31 with a first thread 33 having a metric and a diameter d different from those of the connector part 31' with a second thread 33' having its own metric and diameter d'.

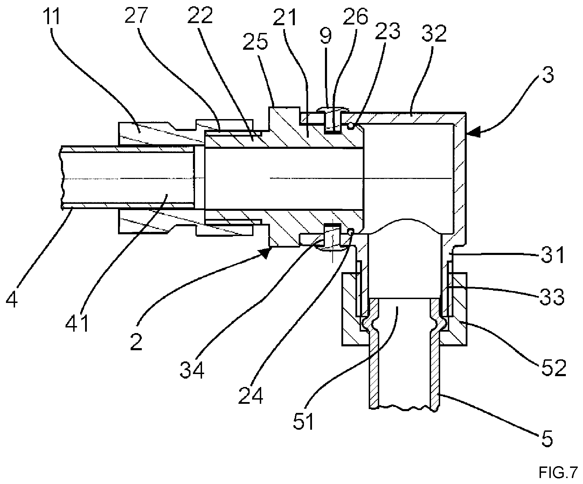

Figure 7 shows a schematic view of the connection between the main gas inlet pipe end 41 of the main gas inlet pipe 4 and the grid pipe outlet 51 of the gas supply grid pipe 5 by means of the gas inlet connector 1.

A connecting element of main gas inlet pipe 11 is fixed tightly to the main gas inlet pipe end 41 and has a female thread to which the external thread 27 of the head portion 21 is screwed. The external thread 27 of the head portion 21 of the nut element 2 has been screwed to the connecting element of main gas inlet pipe 11 by means of the nut portion 25 to guarantee a secure tightening and tightness. The connecting portion 22 is located on the other side of the nut portion 25 of the nut element 2 and has a ring-shaped sealing slot 23 with a sealing gasket 24 and a first ring-shaped slot 26 in which the stops 9 extending through the openings 34 provided in the wall of the coupling part 32 of the first connection fitting 3 are fitted. Furthermore, it can be seen that the sealing gasket 24 arranged in the ring-shaped sealing slot 23 guarantees a tight closure of the entire connection perimeter between the outer face of the connecting portion 22 and the inner face of the coupling part 32. In this manner, the risk of gas leakages is minimised. The first connection fitting 3 is L-shaped and, at its other end, it has the connector part 31 ending with a first thread 33 on which the first fixing element of gas supply grid pipe 52 of the grid pipe outlet 51 of the gas supply grid pipe 5 is screwed tightly.

The gas passageway extends through the entire gas inlet connector 1 in such a manner that the gas can flow freely from the gas supply grid pipe 5 to the main gas inlet pipe 4.

If the gas cooktop 10 needs to be installed and connected to a gas supply grid pipe 5 with a grid pipe outlet 51 having a fixing element of gas supply grid pipe 52 of a different diameter, the stops 9 would be disconnected easily to separate the nut element 2 from the first connection fitting 3 and to subsequently connect the nut element 2 to the coupling part 32 of the second connection fitting 3' and to connect the stops 9 again. The second connection fitting 3' would be connected to the second fixing element of gas supply grid 52' having a metric and a diameter corresponding to the second thread 33' of the connector part 31' of the second connection fitting 3'. A tight and simplified connection is thereby guaranteed.

### Reference numerals

- 1: gas inlet connector
- 2: nut element
- 21: head portion
- 22: connecting portion
- 23: ring-shaped sealing slot
- 24: sealing gasket
- 25: nut portion
- 26: first ring-shaped slot
- 27: external thread
- 3: first connection fitting
- 3': second connection fitting
- 31,: 31' connector part
- 32: coupling part
- 33: first thread
- 33': second thread
- 34: opening
- 4: main gas inlet pipe
- 41: main gas inlet pipe end
- 5: gas supply grid pipe
- 51: grid pipe outlet
- 52: first fixing element of gas supply grid pipe
- 52': second fixing element of gas supply grid pipe
- 6: gas tap
- 7: gas burner
- 8: secondary gas pipe
- 9: stop
- 10: gas cooktop
- 11: connecting element of main gas inlet pipe
- 12: housing

## Claims

1. A gas cooktop (10) comprising a main gas inlet pipe (4) for channelling gas to at least one gas tap (6), a gas burner (7) connected to the gas tap (6) by means of a secondary gas pipe (8) and a gas inlet connector (1) for connecting a main gas inlet pipe end (41) to a grid pipe outlet (51) of a gas supply grid pipe (5), wherein the gas inlet connector (1) has
a nut element (2), with a screwed head portion (21) connected with a screwed fitting to the main gas inlet pipe end (41), with a connecting portion (22) provided with a ring-shaped sealing slot (23) in a circumferential direction with a sealing gasket (24), and with a nut portion (25) arranged between the head portion (21) and the connecting portion (22), and
at least one first elbow-shaped connection fitting (3), with a coupling part (32) removably connected to the connecting portion (22) and a connector part (31) having a first thread (33) to connect the at least one first connection fitting (3) to the grid pipe outlet (51) by means of a screwable fitting,
**characterised in that**
the gas inlet connector (1) further has a second connection fitting (3') connectable by means of its coupling part (32') to the connecting portion (22) of the nut element (22) replacing the first connection fitting (31) and differing from the first connection fitting (31) **in that** the connector part (31') of the second connection fitting (31') has a second thread (33') different from the first thread (33) regarding metric and/or diameter.

2. The gas cooktop according to claim 1, **characterised in that** the coupling part (32, 32') is provided with an opening (34) formed through its circumferential wall, the outer wall of the connecting portion (22) is provided with a first ring-shaped slot (26) in the circumferential direction, a stop (9) is mounted in the opening (34), and the stop (9) extends up to the first ring-shaped slot (26).

3. The gas cooktop according to claim 2, **characterised in that** the opening (34) is a circular orifice and the stop (9) is a screw.

4. The gas cooktop according to claim 2, **characterised in that** the opening (34) is an arc-shaped opening and the stop (9) is a clamp.

5. The gas cooktop according to any of the preceding claims, **characterised in that** the outer wall of the connecting portion (22) is provided with at least two ring-shaped sealing slots (23) and the sealing gasket (24) is an O-shaped sealing gasket.

6. The gas cooktop according to any of the preceding claims, **characterised in that** the outer wall of the connecting portion (22) is provided with a second ring-shaped slot in the circumferential direction and a metal inner ring is mounted in the second ring-shaped slot.

7. The gas cooktop according to any of the preceding claims, **characterised in that** it further comprises a connecting element of main gas inlet pipe (11) mounted on the main gas inlet pipe end (41) and screwed to the head portion (21) of the nut element (2).

8. The gas cooktop according to claim 7, **characterised in that** the head portion (21) is provided with an external thread (27), the connecting element of main gas inlet pipe (11) is provided with an internal thread and the head portion (21) is screwed into the connecting element of main gas inlet pipe (11).

9. The gas cooktop according to any of the preceding claims, **characterised in that** the first thread (33) and the second thread (33') can be screwed to a first and a second fixing element of gas supply grid pipe (52, 52') respectively, which is arranged at the grid pipe outlet (51) .

10. The gas cooktop according to claim 9, **characterised in that** the connector part (31) is provided with a first external thread (33, 33'), the fixing element of gas supply grid pipe (52, 52') is provided with an internal thread and the connector part (31) is screwed into the fixing element of gas supply grid pipe (52, 52').
